Europäisches Patentamt

European Patent Office

Office européen des brevets

(11) Veröffentlichungsnummer: **0 021 040**
A1

# EUROPÄISCHE PATENTANMELDUNG

(21) Anmeldenummer: 80102811.9

(22) Anmeldetag: 21.05.80

(51) Int. Cl.³: **G 11 B 25/06**, G 11 B 1/00

(30) Priorität: 15.06.79 DE 7917274 U

(43) Veröffentlichungstag der Anmeldung: 07.01.81
Patentblatt 81/1

(84) Benannte Vertragsstaaten: **AT BE CH DE FR GB IT LI LU NL SE**

(71) Anmelder: **BASF Aktiengesellschaft, Carl-Bosch-Strasse 38, D-6700 Ludwigshafen (DE)**

(72) Erfinder: **Schoettle, Klaus, Ladenburger Strasse 70, D-6900 Heidelberg (DE)**
Erfinder: **Ilmer, Andreas, Londoner Ring 15, D-6700 Ludwigshafen (DE)**
Erfinder: **An der Heiden, Rainer, Bruesseler Ring 53, D-6700 Ludwigshafen (DE)**
Erfinder: **Kaemmer, Eduard, Stefansring 6, D-6701 Schauernheim (DE)**
Erfinder: **Klein, Siegfried, Am Schachtelgraben 14, D-6733 Hassloch (DE)**

(54) **Gerät für Magnetbandkassetten.**

(57) Gerät für Magnetbandkassetten mit einem Gehäuse (1) und einer darin lösbar befestigten, als Leiterplatte ausgebildeten Grundplatte (2), auf der ein Kassettenlaufwerk (3) und Baueinheiten (4, 5, 6, 7) für die Geräteelektronik und die Bedienungselemente gehalten und untereinander elektrisch verbunden sind.

EP 0 021 040 A1

BASF Aktiengesellschaft　　　　　　O.Z. 0050/033910

Gerät für Magnetbandkassetten

Die Erfindung bezieht sich auf ein Gerät für Magnetbandkassetten, bei dem ein Kassettenlaufwerk und Baueinheiten
der Geräteelektronik sowie eine oder mehrere Baueinheiten
für die Bedienungselemente in einem Gehäuse angeordnet
und mit diesem verbunden sind.

Gewöhnlich sind Geräte dieser Art so aufgebaut, daß, wie
in der DE-OS 23 50 236 beschrieben, das Kassettenlaufwerk
und die Geräteelektronik als separate Baueinheiten in
einem Gehäuse untergebracht und alle Bedienungselemente
für das Gerät an der Frontseite des Gehäuses angeordnet
sind. Zweckmäßigerweise sind dabei alle Geräteteile
meistens auf einen gemeinsamen Rahmen aus Metall montiert,
der mit dem Gehäuse lösbar verbunden ist, so daß das
Gerät, beispielsweise zur Wartung oder Reparatur, in
seiner Gesamtheit durch Lösen weniger Verbindungen,
gewöhnlich Schraubenverbindungen, einfach und schnell vom
Gehäuse getrennt werden kann.

Nachteilig anzusehen ist bei einem derartigen Geräteaufbau,
daß die elektrischen Verbindungen der einzelnen Baueinheiten der Geräteelektronik untereinander und zu den Bedienungselementen durch einzelne Drähte in Form von Kabelbündeln
oder neuerdings Flachbandkabel hergestellt sind. Es
werden dabei zwar Steckverbindungen verwendet, im Hinblick
auf die Leiterplattentechnik jedoch entsprechen Drahtverbindungen, bei denen die Drahtenden an die Verbindungsstecker angelötet werden müssen, nicht einer rationellen
Herstellungstechnik.

Sp/ro

Demgemäß liegt vorliegender Erfindung die Aufgabe zugrunde, einen Geräteaufbau zu entwickeln, bei dem die Drahtverbindungen entfallen können.

Die erfindungsgemäße Lösung dieser Aufgabe ist dadurch gekennzeichnet, daß das Kassettenlaufwerk und die Baueinheiten auf einer gemeinsamen Grundplatte angeordnet und mit dieser verbunden sind, die als Leiterplatte ausgebildet und mit dem Gehäuse lösbar verbunden ist, wobei zwischen den Baueinheiten und der Grundplatte und deren Leiterbahnen Steckverbindungen vorgesehen sind.

Die Grundplatte, die sämtliche Funktionsteile des Gerätes aufnimmt, erfüllt gleichzeitig die Funktion einer Leiterplatte, wodurch die Herstellung der elektrischen Verbindungsorgane zwischen den Leiterplatten der Baueinheiten wie bei diesen mechanisiert werden kann. Die Gerätefertigung ist dadurch wirtschaftlicher und weniger anfällig für Montagefehler. Ferner kann der Geräteaufbau kompakter gestaltet werden.

Die Erfindung ist nachfolgend anhand eines in der Zeichnung dargestellten Ausführungsbeispiels näher erläutert.

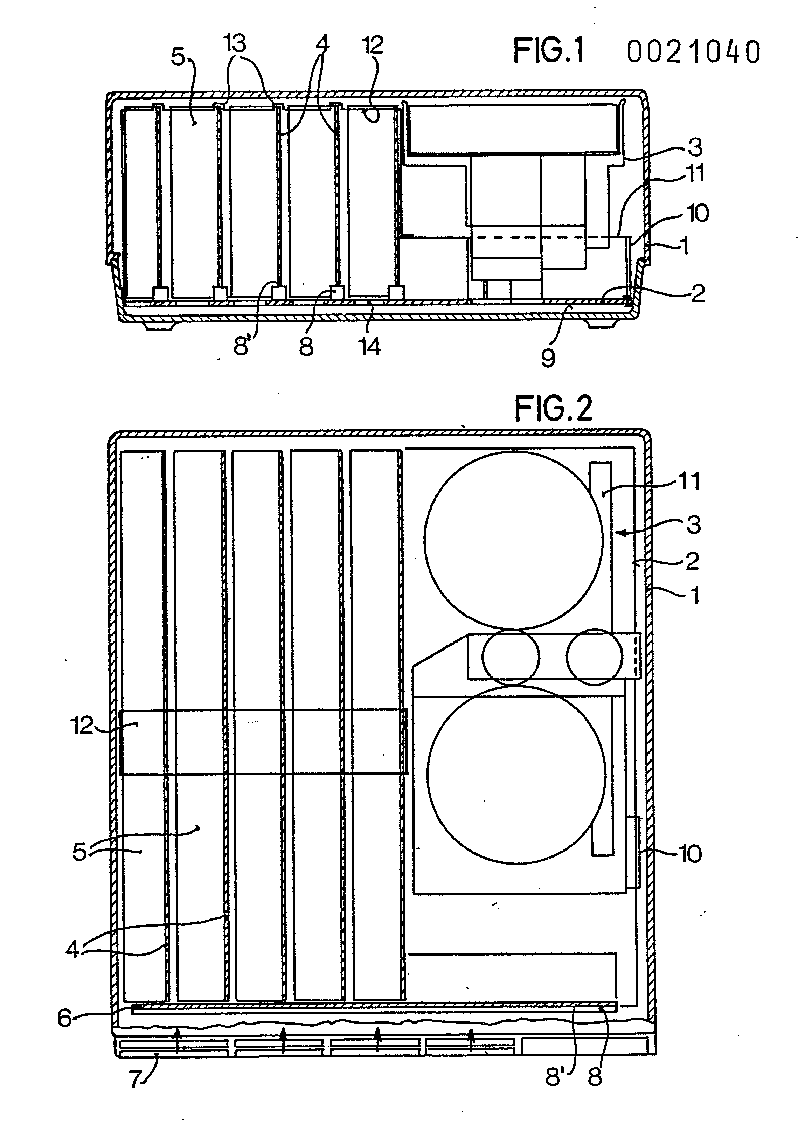

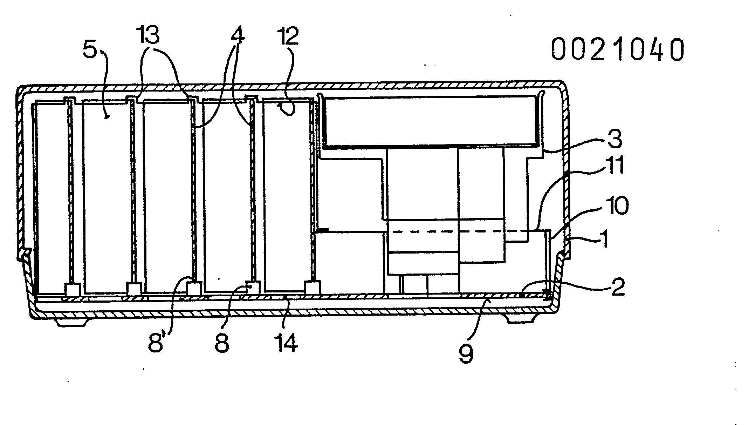

Es zeigen
Fig. 1  eine Seitenansicht des Geräteaufbaus bei entfernter Seitenwand
Fig. 2  den Geräteaufbau in der Draufsicht bei aufgeschnittenem Gehäuseoberteil

Auf einer Grundplatte 2, die auf der Unterseite als gedruckte Leiterplatte ausgebildet ist, sind sämtliche Funktionsteile des Gerätes untergebracht. Sie bestehen im wesentlichen aus dem Kassettenlaufwerk 3 und mehreren Leiterplatten 4 mit den Schaltkreisen 5 der Geräteelektronik sowie aus einer gedruckten Leiterplatte 6 mit den Bedie-

nungselementen 7. Die Leiterplatten 4, 6 sind stehend auf der Grundplatte 2 angeordnet und mit Hilfe von Steckverbindungen, die aus in der modernen Geräteelektronik bekannten Kontaktleisten 8,8' bestehen, auf der Grundplatte befestigt. Ferner stehen die Schaltkreise 5 auf den gedruckten Leiterplatten 4, 6 mittels der Steckverbindungen über die Leiterbahnen 9 der Grundplatte 2 miteinander in Verbindung. Steckbuchsen (in der Zeichnung nicht sichtbar) zum Anschluß von Zubehörgeräten sind ebenfalls durch Steckverbindungen mit der Grundplatte und deren Leiterbahnen verbunden.

Das Kassettenlaufwerk 3 ist an zwei Seiten mit Hilfe von Winkelstücken 10 aus Metall oder Kunststoff, die am Rahmen 11 des Laufwerks beispielsweise durch Schrauben befestigt sind, von der Grundplatte 2 getragen. Die Befestigung der Winkelstücke an der Grundplatte ist dadurch hergestellt, daß der entsprechende Schenkel jedes Winkelstücks den Rand der Grundplatte klemmend umfaßt. Selbstverständlich kann dieser Schenkel auch durch andere geeignete Befestigungsmittel, wie Schrauben oder Nieten, mit der Grundplatte verbunden sein. Durch die Klemmverbindung ist eine besonders einfache und fertigungstechnisch rationelle Montage gegeben. An der den Leiterplatten 4 benachbarten Seite ist der Rahmen 11 des Laufwerks durch einen die Leiterplatten 4 übergreifenden und entsprechend der Anordnungsgeometrie mehrfach abgewinkelten Streifen 12 aus Metall oder Kunststoff auf die gleiche Weise mit der Grundplatte 2 verbunden. Es hat sich dabei als vorteilhaft erwiesen, den übergreifenden Teil des Streifens zur weiteren Stützung der Leiterplatten 4 mit Faltungen 13 in der Stärke der Leiterplatten zu versehen. Die Winkelstücke 10 und der Streifen 12 werden zweckmäßigerweise durch Stanzen bzw. Pressen hergestellt, bei Verwendung von Kunststoff als Werkstoff durch Spritzgießen. Die elektrische Verbindung des Kassettenlaufwerks mit den Leiterbahnen 9 der Grundplatte 2 ist durch ein steckbares Flachbandkabel vorgenommen.

Zur besseren Belüftung der elektronischen Baueinheiten und des Antriebsmotors des Kassettenlaufwerks ist die Grundplatte 2 in Höhe der Leiterplatten 4 und des Antriebsmotors mit Durchbrechungen 14 versehen.

Die Art der Befestigung der Grundplatte 2 und damit des gesamten Gerätes im Gehäuse 1 hängt neben einer guten Zugänglichkeit von der Gestaltung und Formgebung des Gehäuses ab. Beispielsweise kann die Grundplatte direkt mit dem Boden des Gehäuseunterteils verschraubt werden. Es können aber auch an den Gehäuseinnenwänden angeformte Vorsprünge vorgesehen sein, an denen die Grundplatte zu befestigen ist. Die für den jeweiligen Gestaltungsfall geeignete Befestigungsart kann mit den dem Fachmann zur Verfügung stehenden Mitteln bestimmt werden.

Patentansprüche

1. Gerät für Magnetbandkassetten, bei dem ein Kassettenlaufwerk und Baueinheiten der Geräteelektronik sowie eine oder mehrere Baueinheiten für die Bedienungselemente in einem Gehäuse angeordnet und mit diesem verbunden sind, dadurch gekennzeichnet, daß Kassettenlaufwerk (3) und Baueinheiten (4, 5, 6, 7) auf einer gemeinsamen Grundplatte (2) angeordnet und mit dieser verbunden sind, die als Leiterplatte ausgebildet und mit dem Gehäuse (1) lösbar verbunden ist, wobei zwischen den Baueinheiten und der Grundplatte und deren Leiterbahnen (9) Steckverbindungen (8,8') vorgesehen sind.

2. Gerät nach Anspruch 1, dadurch gekennzeichnet, daß die Grundplatte (2) Durchbrechungen (14) für die Belüftung des Laufwerkmotors und der elektronischen Bauelemente (5) aufweist.

3. Gerät nach Anspruch 1 und 2, dadurch gekennzeichnet, daß das Kassettenlaufwerk (3) durch Winkelstücke (10; 12) mit der Grundplatte (2) verbunden ist, wobei die Winkelstücke formschlüssig am Plattenrand festgehalten sind und mindestens ein Winkelstück (12) die Baueinheiten der Geräteelektronik (4, 5) zur zusätzlichen Stützung übergreift.

Zeichn.

FIG.1    0021040

FIG.2

0050 / 033 910

Europäisches Patentamt

# EUROPÄISCHER RECHERCHENBERICHT

0021040

Nummer der Anmeldung

EP 80 10 2811

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 246 921 (UHER)  * Seite 1, Zeile 23 - Seite 4, Zeile 6; Figuren * | 1,2 |
| D | DE - A - 2 350 236 -- | |
| | FR - A - 2 284 947 (BELTER)  * Seite 6, Zeile 19 - Seite 8, Zeile 17; Figuren *  & DE - A - 2 541 002 -- | 1 |
| | CH - A - 421 546 (TELEVISION RE-SEARCH)  * Seite 1, Zeile 63 - Seite 2, Zeile 88; Figuren * -- | 1,2 |
| | DE - A - 2 105 382 (TRIUMPH)  * Seiten 2,3; Figur * -- | 1,2 |
| | FR - A - 2 046 084 (BOSCH)  * Seite 5, Zeilen 13-29; Figuren *  & GB - A - 1 311 101 -- | 1 |
| | FR - A - 1 225 029 (T.R.T.)  * Seite 1, rechte Spalte; Seite 2, linke Spalte; Figur * -- | 1 |
| A | FR - A - 1 272 296 (GELOSO)  & GB - A - 907 166 ---- | 1 |

### KLASSIFIKATION DER ANMELDUNG (Int. Cl.³)

G 11 B 25/06
        1/00

### RECHERCHIERTE SACHGEBIETE (Int. Cl.³)

G 11 B 25/06
        31/00
         1/00
         1/04
H 05 K   3/36
         7/02
         7/14
         5/00
         5/04

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-09-1980 | DECLAT |

EPA form 1503.1  06.78